# EUROPEAN PATENT APPLICATION

(11) **EP 4 718 896 A1**
(43) Date of publication of application: **01.04.2026**
(21) Application number: 24829756.6
(22) Date of filing: 19.01.2024
(51) Int. Cl.: H04W 8/20, H04W 16/10

(54) **CALL SERVICE PROCESSING METHOD, SYSTEM, AND APPARATUS, AND COMPUTER READABLE STORAGE MEDIUM**

(30) Priority: 26.06.2023 CN 202310762235
(71) Applicant: ZTE CORPORATION, Shenzhen, Guangdong 518057 (CN)
(72) Inventor: LI, Xiaodi, Shenzhen, Guangdong 518057 (CN)
(74) Representative: Ziebig Hengelhaupt Intellectual Property Attorneys Patentanwaltskanzlei PartGmbB
(86) International application number: PCT/CN2024/073326
(87) International publication number: WO 2025/001093

(57) **Abstract**

The present application proposes a call service processing method, including: in response to that a central user plane function, UPF, network element receives service messages initiated by a user equipment, UE, identifying the service message that meets a preset condition, and obtaining a target service message; reporting, by the central UPF, the target service message to a session management function, SMF; and receiving, by the SMF, the target service message reported by the central UPF, and selecting one local UPF to process the target service message. The present application further proposes a call service processing system, a call service processing device, and a computer-readable storage medium.

## Description

### CROSS-REFERENCE TO RELATED APPLICATIONS

This application claims priority to Chinese Patent Application No. 202310762235.3, filed June 26, 2023, the entire contents of which are incorporated herein by reference.

### TECHNICAL FIELD

The present application relates to the technical field of communication, specifically to a call service processing method, a call service processing system, a call service processing device, and a computer-readable storage medium.

### BACKGROUND

With the large-scale deployment of 5G networks and the commercialization of VoNR services, the high bandwidth and low latency characteristics of 5G and 5G-Advanced provide a solid network foundation for upgrading high-definition audio and video communication to interactive and immersive audio and video communication. Under the 5G-Advanced architecture, VoNR networks will evolve into VoNR+ (Voice over New Radio) networks. VoNR+ refers to the overlay of new data channels and accompanying voice capabilities with audio and video on the basis of 5G VoNR networks, supporting multiple types of data transmission and providing a basic capability foundation for the VoNR+ service ecosystem.

Because VoNR+ supports more application scenarios, a large number of new messages will be generated from the calling user to the called user. These messages will sequentially pass through the calling user's UPF (User Plane Function), IMS (IP Multimedia Subsystem), and the called user's UPF (longer messages transmission path). This increased number of messages will increase the load on IMS and the wide network UPF, affecting data transmission and reducing call quality.

### SUMMARY

To address the aforementioned technical problems, the present application provides a call service processing method, a call service processing system, a call service processing device, and a computer-readable storage medium, aiming to reduce the load on IMS and the wide network UPF and improve the call quality of VoNR+.

On the first aspect, the present application provides a method for processing a call service processing method, including: in response to that a central user plane function, UPF, network element receives service messages initiated by a user equipment, UE, identifying the service message that meets a preset condition, and obtaining a target service message; reporting, by the central UPF, the target service message to a session management function, SMF; and receiving, by the SMF, the target service message reported by the central UPF, and selecting one local UPF to process the target service message

On the other hand, the present application further provides a call service processing method, including: receiving, by a session management function, SMF, a target service message reported by a central user plane function, UPF, network element; and selecting one local UPF to process the target service message.

Furthermore, the present application further provides a call service processing method, further including: in response to that a central user plane function, UPF, network element receives service messages initiated by a user equipment, UE, identifying the service message that meets a preset condition, and obtaining a target service message; and reporting the target service message to a session management function, SMF.

Furthermore, embodiments of the present application further provide a call service processing system, including: a processor; and a storage device storing a program, when the program is executed by the processor, the processor implements the call service processing method described in any of the aforementioned embodiments.

Furthermore, embodiments of the present application further provide a call service processing device, including: one or more processors; and
a storage device storing one or more programs, when the one or more programs are executed by the one or more processors, the one or more processors implement the call service processing method described in any of the aforementioned embodiments.

Furthermore, embodiments of the present application further provide a computer-readable storage medium, storing a computer processing program, the computer processing program is invoked by a processor to execute the call service processing method described in any of the aforementioned embodiments.

### BRIEF DESCRIPTION OF THE DRAWINGS

The accompanying drawings, which are incorporated in and form a part of this specification, illustrate embodiments consistent with the present application and, together with the description, serve to explain the principles of the present application. To more clearly illustrate the technical solutions of the embodiments of the present application, the drawings used in the description of the embodiments will be briefly introduced below. Obviously, those skilled in the art can obtain other drawings based on these drawings without any creative effort.
FIG. 1 is a schematic diagram of 5G architecture for implementing a call service processing method of the present application.
FIG. 2 is a schematic diagram of another 5G architecture for implementing a call service processing method of the present application.
FIG. 3 is a flowchart of a first embodiment of a call service processing method of the present application.
FIG. 4 is a flowchart of a second embodiment of a call service processing method of the present application;
FIG. 5 is a data optimization diagram in the second embodiment of the call service processing method of the present application.
FIG. 6 is a flowchart of a third embodiment of a call service processing method of the present application.
FIG. 7 is a flowchart of a fourth embodiment of a call service processing method of the present application.
FIG. 8 is a data optimization diagram in the fourth embodiment of the call service processing method of the present application.

The realization of the purpose, functional characteristics, and advantages of the present application will be further explained in conjunction with the embodiments and with reference to the accompanying drawings. The aforementioned accompanying drawings have illustrated specific embodiments of the present application, which will be described in more detail below. These drawings and descriptions are not intended to limit the scope of the concept in any way, but rather to illustrate the concepts of the present application to those skilled in the art by reference to particular embodiments.

### DETAILED DESCRIPTION OF THE EMBODIMENTS

Exemplary embodiments will now be described in detail, examples of which are illustrated in the accompanying drawings. When the following description relates to the drawings, unless otherwise indicated, the same numbers in different drawings denote the same or similar elements. The embodiments described in the following exemplary embodiments do not represent all embodiments consistent with the present application. Rather, they are merely examples of apparatuses, devices, and methods consistent with some aspects of the present application as detailed in the appended claims.

In this document, the terms "comprising", "including", or any other variations thereof are intended to cover a non-exclusive inclusion, such that a process, method, article, or apparatus device that includes a list of elements includes not only those elements but also other elements not expressly listed, or elements inherent to such a process, method, article, or apparatus device. Without further limitation, an element defined by the phrase "including one..." does not exclude the presence of other identical elements in the process, method, article, or apparatus device that includes that element. Furthermore, components, features, and elements with the same names in different embodiments of the present application may have the same meaning or different meanings, the specific meaning of which must be determined by its interpretation in that specific embodiment or further in the context of that specific embodiment.

Although the terms first, second, third, etc., may be used herein to describe various information, such information should not be limited to these terms. These terms are used only to distinguish information of the same type from one another. For example, without departing from the scope of this document, first information may also be referred to as second information, and similarly, second information may also be referred to as first information. Depending on the context, the word "if" as used herein, may be interpreted as "when", "while", or "in response to determination". Furthermore, as used herein, the singular forms "a", "an", and "the" are intended to also include the plural forms unless the context indicates otherwise. It should be further understood that the terms "comprising", "including" indicate the presence of the stated feature, step, operation, element, component, item, kind, and/or group, but do not exclude the presence, occurrence, or addition of one or more other features, steps, operations, elements, components, items, kinds, and/or groups. The terms "or", "and/or", "including at least one of the following", etc., as used in the present application, may be interpreted as inclusive, or mean any one or any combination thereof. For example, "including at least one of the following: A, B, C" means "any one of the following: A; B; C; A and B; A and C; B and C; A and B and C", and "A, B, or C", or "A, B, and/or C" means "any one of the following: A; B; C; A and B; A and C; B and C; A and B and C". Exceptions to this definition only occur when the combination of elements, functions, steps, or operations is inherently mutually exclusive in some way.

Although the steps in the flowcharts of the embodiments of the present application are shown sequentially according to the arrows, these steps are not necessarily executed in the order indicated by the arrows. Unless explicitly stated herein, there is no strict order restriction on the execution of these steps, and they can be executed in other orders. Furthermore, at least some of the steps in the figures may include multiple sub-steps or multiple stages, which are not necessarily completed at the same time, but can be executed at different times, and their execution order is not necessarily sequential, but can be performed alternately or in turn with other steps or at least a portion of the sub-steps or stages of other steps.

Depending on the context, the words "if" or "in case" as used herein can be interpreted as "when", "when", "in response to determining" or "in response to detecting". Similarly, depending on the context, the phrases "if determining" or "if detecting (of the stated condition or event)" can be interpreted as "when determining", "in response to detecting", "when detection (of the stated condition or event)", or "in response to detection (of the stated condition or event)".

It should be noted that step designations such as S10 and S20 are used herein for the purpose of more clearly and concisely describing the corresponding content and do not constitute a substantial limitation on the order. Those skilled in the art may execute S20 before S10, etc., in specific implementations, but these should all be within the scope of the present application.

The specific embodiments described herein are merely illustrative of the present application and are not intended to limit the present application.

In the following description, suffixes such as "module", "component", or "unit" used to denote elements are used only for the purpose of illustrative purposes and have no specific meaning in themselves. Therefore, "modules", "components", or "units" can be used interchangeably.

VoNR+ (Voice over New Radio) supports more application scenarios. Therefore, during call establishment, in addition to establishing traditional dedicated voice and video transport channels, other new data channels will be established according to new service requirements to transmit all service data. The increase in application scenarios inevitably leads to a large amount of new service data. This service data, from the calling user to the called user, needs to pass through the calling user's UPF (User Plane Function), IMS (IP Multimedia Subsystem), and the called UPF (long message transmission path). The increased number of messages will increase the load on IMS and the wide network UPF, affecting not only the transmission of existing VoNR voice services but also the transmission of new service data, thus reducing call quality.

To address this, a novel method is proposed in the process of conceiving ways to improve VoNR+ call quality. By classifying and processing newly added VoNR+ services, some services can be localized and reduce the data transmitted to peer users, thereby lowering the load on IMS and the wide network UPF. In some embodiment, by optimizing the transmission format of service data, reducing the transmission load, thereby lowering the load on IMS and the wide network UPF, improving the transmission efficiency of service data, and ultimately enhancing VoNR+ call quality.

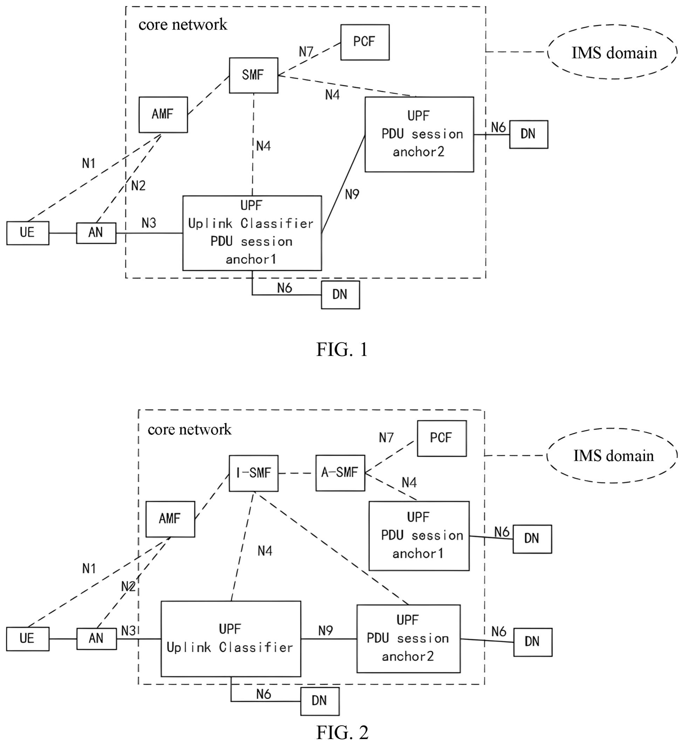

Referring to FIG. 1 and FIG. 2, FIG. 1 illustrates a 5G system architecture (non-roaming scenario) involved in the call service processing method of the present application, and FIG. 2 illustrates another 5G system architecture (roaming scenario) involved in the call service processing method of the present application.

In non-roaming scenarios, the 5G system architecture: a co-location scenario of ULCL (UpLink Classifier) and PSA1 (PDU Session Anchor1), which includes: UE (User Equipment), (R)AN ((Radio) Access Network), AMF (Access and Mobility Management Function), SMF (session management function), ULCL (UpLink Classifier), and PSA (PDU Session Anchor).

In roaming scenarios, the 5G system architecture: a co-location scenario of ULCL (UpLink Classifier) and PSA1 (PDU Session Anchor1), which includes: UE (User Equipment), (R)AN ((Radio) Access Network), AMF (Access and Mobility Management Function), I-SMF (Intermediate session management function), A-SMF, ULCL (UpLink Classifier), and PSA (PDU Session Anchor).

Based on the aforementioned system architecture, the call service processing method of the present application implements the operation of the following embodiments.

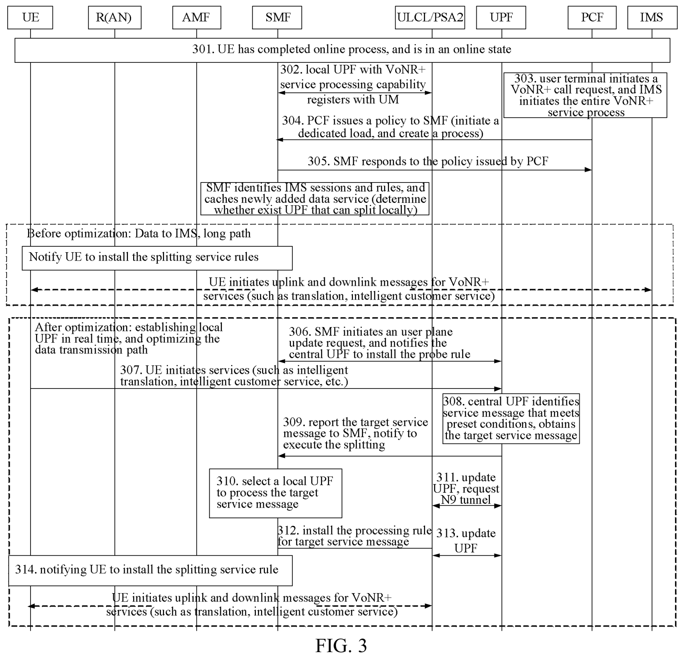

Referring to FIG. 3, FIG. 3 is a flowchart illustrating an embodiment of the call service processing method of the present application. This embodiment illustrates a processing method for a newly added service message in the call service, such as offloading the newly added service message to local processing, reducing the transmission of service messages during the call, thereby reducing the load on IMS and the wide network UPF, and improving call quality.

In this embodiment, the call service processing method includes:
Step S301: the UE has completed online and is in an online state.

The user terminal has completed online and is in an online state. At this time, the user terminal can initiate a call request, or the user terminal can receive a call request.

Step S302: the local UPF with VoNR+ service processing capability registers with the UM.

VoNR+ service includes the original VoNR voice service and services newly added relative to the original VoNR voice service. Based on VoNR+, new call supports more application scenarios. When a VoNR+ call is established, in addition to the original VoNR voice service, there are also other application scenarios.

In an embodiment, the 5G communication architecture includes a local UPF and a wide network UPF. The local UPF has the capability to process certain services (execution capability for service message rules), such as handling translation and intelligent customer service Q&A, without needing to go through the wide network UPF. Therefore, after the user terminal completes its online deployment, when the local UPF registers with the UM, it indicates the processing capabilities that the local UPF possesses; for example, adding the field "Capability: Local service processing" to the "N4 PFCP Assoication Setup Req" message. In this way, the UM records the service processing capabilities of each local UPF.

In an embodiment, different local UPFs have different service processing capabilities, and the corresponding service processing capability is marked according to the service type being processed. Thus, subsequently, the local UPF can be selected based on the service type matched by the processing capabilities reported by the local UPF.

Step S303: the user terminal initiates a VoNR+ call request, and the IMS initiates the entire VoNR+ service process.

When the user terminal initiates a VoNR+ call request, the VoNR+ service process is started. Before any service message is transmitted, rules for identifying service messages are established, that is, probe rules for service messages are established, creating a processing environment for the local UPF to process service messages.

Step S304: the PCF issues a policy to the SMF.

Base on that the call request is a VoNR+ call request, including existing VoNR voice services, and further including services of other application scenarios, the policy issued by the PFC includes policies related to accessing VoNR voice services, as well as policies related to accessing newly added VoNR+ services.

After the user terminal initiates the call request, the PCF (policy control function Network Element) issues the policy for the call request, thereby determining the processing rule for the call request.

Step S305: the SMF responds to the policy issued by the PCF.

In this embodiment, the SMF responds to the policy issued by the PCF and identifies the IMS (IP Multimedia Subsystem) session to determine whether the IMS session includes a request for a newly added service.

If the IMS session includes a request for a newly added service, identifying whether the call involves a newly added service according to the data network interface identifier (Dnai) in the policy rule. In this embodiment, newly added services unrelated to the peer user are configured as target service messages, and newly added services unrelated to the peer user can be configured as service messages processed by the local server.

In this embodiment, the SMF determines whether the call request involves a target service message rule by identifying the call request rule. If it does, it determines that some service messages in the call can be routed to the local server and processed by the local server.

In an embodiment, when determining that a target service message exists, the SMF first considers the processing capabilities of the local UPF reported to UM during registration, such as the ability to execute rules for the target service message, to determine the corresponding local UPF capable of processing the target service message locally; then, it selects that local UPF to process the newly added target service message in the call.

If a pre-stored local UPF has the capability to execute the splitting service rule for the target service message, then the splitting service rule is cached so that when a service message is subsequently generated, the splitting service rule is used to perform local processing on the service message.

In this embodiment, if the local UPF reports a UPF with processing capabilities but does not include the capability to process the target service message, that is, if the pre-stored local UPF does not have the capability to execute the splitting service rule for the target service message, then this embodiment can further create a local UPF capable of processing the target service message according to the requirements of the target service message.

In some embodiment, for uplink-triggered services, it's possible to consider establishing the ULCL after triggered when the user has an uplink message, that is, inserting a local UPF on demand. In other words, the uplink message has a relatively high degree of randomness and a relatively high degree of diversity. Therefore, a local UPF capable of handling the message can be created according to the requirements of the target service message.

Once the SMF determines that the system has a local UPF capable of processing the target service message, caching the splitting rule for the target service message. (In this embodiment, the splitting service rule refers to the rule for processing the service message. It is defined as the splitting service rule base on that it can be split from other voice message services.)

In an embodiment, the SMF further constructs a probe rule for the splitting service rule. This probe rule is configured to identify the type of service message transmitted during a call, thereby triggering a choice between local UPF processing and further transmission to a wide network UPF (central UPF) for processing.

Step S306: the SMF initiates a user plane update request, and notifies the central UPF to install the probe rule.

After constructing the probe rule for the splitting service rule, the SMF sends the user plane update information to the central UPF to allow the central UPF update the user plane functionality of the central UPF. The update request carries the probe rule constructed in step S305. The central UPF installs the probe rule and responds to the SMF with the installation result and allocated resource information.

Step S307: the UE initiates a service (such as intelligent translation, intelligent customer service, etc.).

The user terminal initiates a service, and generates a service message.

In this embodiment, VoNR+ calls include various call scenarios, therefore, there are many types of service messages. For example, scenarios such as intelligent translation, intelligent customer service, fun calls, screen sharing, and home terminals, the corresponding message type is different from the original VoNR voice and video call scenarios.

Step S308: the message arrives at the central UPF via the base station, the central UPF identifies service messages that meet preset conditions, and obtains the target service message.

When the central UPF receives a service message initiated by the UE, identifying the type of the service message and determining whether it is a target service message. In this embodiment, the target service message refers to a service message newly added in a VoNR+ call, and this service message meets the following condition: the service message unrelated to the peer user.

If the service message is a target service message, the central UPF reports the service message to the SMF, and the SMF then selects a local UPF to process the service message.

If the service message is not a target service message, the central UPF processes the service message and then transmits to the peer user's central UPF via IMS, without using the local UPF to process, and without reporting to the SMF.

In this embodiment, the identifying the service message that meets the preset condition, and obtaining the target service message includes: identifying whether a target packet data network address of the service message matches a packet data network address in a probe rule, PDR; in response to that the target packet data network address of the service message matches the packet data network address in the probe rule, determining the service message to be the target service message.

The probe rule of the central UPF is sent by the SMF and is specifically constructed for newly added messages that can be processed by the local UPF, used to identify this type of service message.

The PDN (Packet Data Network) address in the probe rule PDR indicates the service type. Different service types correspond to different PDN addresses. In this embodiment, the PDN in the probe rule PDR is matched with the PDN address in the service message. If a match is successful, it is determined that the service message is a newly added service message that can be processed using local UPF (the service message unrelated to the peer user).

If there is a mismatch, it means the service message is not a newly added service message that can be processed by the local UPF. Therefore, it will not be reported to the SMF and will be transmitted to the peer user's central UPF via the ISM. In some embodiment, for other types of service messages, using other methods to process.

Step S309: the central UPF reports the target service message to the SMF.

In an embodiment, when the central UPF determines that a message is a service unrelated to the peer user, indicating to the SMF that there is a service request that does not require interaction with the peer, and notifying the SMF to execute the local splitting policy.

Step S310: the SMF receives the target service message reported by the central UPF and selects a local UPF to process the target service message.

This embodiment needs to reselect the local UPF according to the splitting service rule corresponding to the previously cached target service message, and determine the current target service message that needs to be inserted in PSA and used for VoNR+.

In this embodiment, the SMF selects a matching local UPF according to the pre-stored splitting service rule and the data network interface identifier (Dnai) of the processing rule to be installed.

Step S311: the SMF initiates a user plane update request, and notifies the central UPF to request an N9 tunnel.

The central UPF establishes an N9 tunnel between the central UPF and the selected local UPF according to the user plane update request, to achieve communication. After the central UPF establishes the N9 tunnel, notifying the SMF.

Step S312: the SMF initiates a user plane establishment request, notifies the local UPF to allocate relevant resources, and installs the processing rule for the target service message.

The SMF initiates a user plane establishment request to the selected local UPF. According to the user plane establishment request, the local UPF allocates the resources required for the target service message and then installs the rules related to the VoNR+ service (target service message) in the local UPF. Thus, the local UPF can directly process the target service based on the installed processing rule of the service message, without needing to relay to the IMS, optimizing the message transmission path, reducing the number of data messages relayed to the IMS, and reducing the load on the IMS.

After the local UPF installs the processing rule of the target service message, feedbacking the installation completion information to the SMF.

Step S313: the SMF initiates a user plane update request to the central UPF, the SMF updates the downlink address to point to the ULCL.

Based on the local UPF installation completion information, the SMF initiates a user plane update request to the central UPF, the central UPF updates the downlink address to point to the forward ULCL. Thus, in this call request, for original VoNR voice and video messages, they are relayed to the IMS and transmitted to the peer user; for the aforementioned target service messages unrelated to the peer user, they are routed to the local UPF for processing, and directly outputted to the user terminal via ULCL after processing in the local UPF, without going through the IMS or the peer user..

Step S314: notifying the UE to install the splitting rule.

After the splitting rules are installed, subsequent transmissions of all target service messages in this call can be directly split without going through ISM and the wide network UPF.

In an embodiment, the aforementioned steps refer to the process of establishing a splitting rule when the target service message is first received during this call. In the service messages initiated subsequently, if the target service message is identified, directly processing by the local UPF, and then sending to the user terminal via ULCL.

In this embodiment, the SMF can request local UPF resources in real time according to the actual needs of VoNR+, optimize the user's data transmission path, and improve call quality.

In this embodiment, some service scenarios bypass IMS and the wide network UPF, providing faster call response to improve the user's VoNR+ service experience.

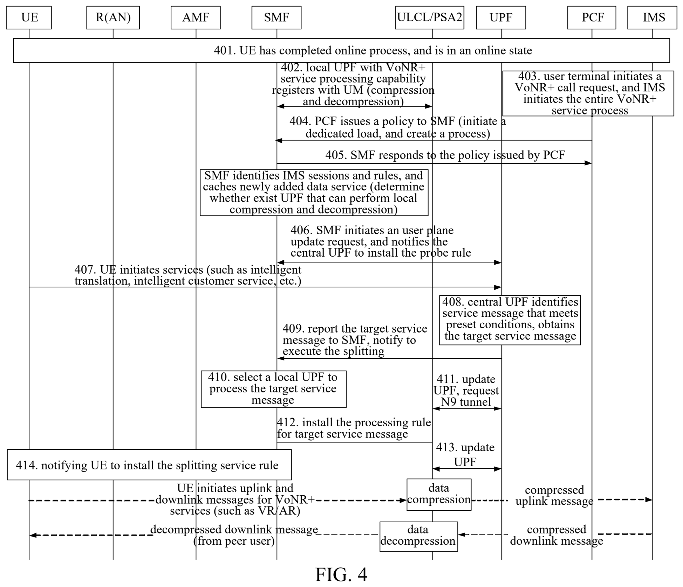

Referring to FIG. 4, FIG. 4 is a flowchart illustrating another embodiment of the call service processing method of the present application. This embodiment illustrates a processing method for another newly added service message in a call service. For example, newly added service messages are split and formatted locally before being transmitted to the peer user via IMS and the wide network UPF. This optimized and formatted service messages can reduce the amount of data transmitted in IMS and the wide network UPF, lower IMS latency, avoid the impact of the newly added VoNR+ data channel service on existing voice and video services, and improve call quality.

In this embodiment, the call service processing method includes:
Step S401: the UE has completed its online setup and is in an online state.

The user terminal has completed its online setup and is in an online state. At this time, the user terminal can initiate a call request or receive a call request.

Step S402: the local UPF with VoNR+ service processing capabilities registers with the UM.

VoNR+ services include existing VoNR voice services and newly added services relative to existing VoNR voice services. Based on that VoNR+ new call supports more application scenarios, when a VoNR+ call is established, in addition to the original VoNR voice service, there are also services for other application scenarios..

In an embodiment, the 5G communication architecture includes a local UPF and a wide network UPF. The local UPF has the capability to process certain services (execution capability of service message rules), such as handling some translation and intelligent customer service Q&A, without needing to process by the wide network UPF. Therefore, after the user terminal completes its online, when the local UPF registers with the UM, indicating the processing capability that the local UPF possesses; for example, adding the field "Capability: Local service processing" to the "N4 PFCP Association Setup Req" message. In this way, the UM records the service processing capability that each local UPF possesses.

In an embodiment, different local UPFs have different service processing capabilities, and the corresponding service processing capability is marked according to the service type being processed. Thus, subsequently, the local UPF can be selected based on the service type matched by the processing capabilities reported by the local UPF.

Step S403: the user terminal initiates a VoNR+ call request, and the IMS initiates the entire VoNR+ service process.

When the user terminal initiates a VoNR+ call request, starting the VoNR+ service process. Before any service message is transmitted, establishing rules for identifying service messages, that is, establishing probe rules for service messages, creating a processing environment for the local UPF to process service messages.

Step S404: the PCF issues a policy to the SMF.

Base on that the call request is a VoNR+ call request, including existing VoNR voice services, and further including services of other application scenarios, the policy issued by the PFC includes policies related to accessing VoNR voice services, as well as policies related to accessing newly added VoNR+ services.

After the user terminal initiates the call request, the PCF (policy control function Network Element) issues the policy for the call request, thereby determining the processing rule for the call request.

Step S405: the SMF responds to the policy issued by the PCF.

In this embodiment, the SMF responds to the policy issued by the PCF and identifies the IMS (IP Multimedia Subsystem) session to determine whether the IMS session includes a request for a newly added service.

If the IMS session includes a request for a newly added service, identifying whether the call involves a newly added service according to the data network interface identifier (Dnai) in the policy rule. In this embodiment, the newly added service message with model characteristics (feature model) that can be extracted to compress and decompress is configured as the target service message. This type of service message is configured to be the service message processed by a local server, where the processing method is to format the service messages; for example, if the service message is an uplink message, then compressing the service message; if the service message is a downlink message, then decompressing the service message.

In this embodiment, the SMF determines whether the call request involves a target service message rule by identifying the call request rule. If it does, it determines that some service messages in the call can be routed to the local server and processed by the local server.

In an embodiment, when determining that a target service message exists, the SMF first considers the processing capabilities of the local UPF reported to UM during registration, such as the ability to execute rules for the target service message, to determine the corresponding local UPF capable of processing the target service message locally; then, it selects that local UPF to process the newly added target service message in the call.

If a pre-stored local UPF has the capability to execute the splitting service rule for the target service message, then the splitting service rule is cached so that when a service message is subsequently generated, the splitting service rule is used to perform local processing on the service message.

In this embodiment, if the local UPF reports a UPF with processing capabilities but does not include the capability to process the target service message, that is, if the pre-stored local UPF does not have the capability to execute the splitting service rule for the target service message, then this embodiment can further create a local UPF capable of processing the target service message according to the requirements of the target service message.

In some embodiment, for uplink-triggered services, it's possible to consider establishing the ULCL after triggered when the user has an uplink message, that is, inserting a local UPF on demand. In other words, the uplink message has a relatively high degree of randomness and a relatively high degree of diversity. Therefore, a local UPF capable of handling the message can be created according to the requirements of the target service message.

Once the SMF determines that the system has a local UPF capable of processing the target service message, caching the splitting rule for the target service message. (In this embodiment, the splitting service rule refers to the rule for processing the service message. It is defined as the splitting service rule base on that it can be split from other voice message services.)

In an embodiment, the SMF further constructs a probe rule for the splitting service rule. This probe rule is configured to identify the type of service message transmitted during a call, thereby triggering a choice between local UPF processing and further transmission to a wide network UPF (central UPF) for processing.

Step S406: the SMF initiates a user plane update request, and notifies the central UPF to install the probe rule.

After constructing the probe rule for the splitting service rule, the SMF sends the user plane update information to the central UPF to allow the central UPF update the user plane functionality of the central UPF. The update request carries the probe rule constructed in step S305. The central UPF installs the probe rule and responds to the SMF with the installation result and allocated resource information.

Step S407: the UE initiates a service (such as intelligent translation, intelligent customer service, etc.).

The user terminal initiates a service, and generates a service message.

In this embodiment, VoNR+ calls include various call scenarios, therefore, there are many types of service messages. For example, scenarios such as intelligent translation, intelligent customer service and so on, the corresponding message type are different from the original VoNR voice and video call scenarios.

Step S408: the message arrives at the central UPF via the base station, the central UPF identifies service messages that meet preset conditions, and obtains the target service message.

When the central UPF receives a service message initiated by the UE, identifying the type of the service message and determining whether it is a target service message. In this embodiment, the target service message refers to a service message newly added in a VoNR+ call, and this service message meets the following condition: the service message with the preset model characteristic. In other words, when the central UPF detects that a service message belongs to a message that can be formatted according to a standard, that is, meeting the preset condition and being the service message with model characteristics.

If the service message is a target service message, the central UPF reports the service message to the SMF, the SMF then selects a local UPF to process the service message, and processes the target service message before being transferred to IMS.

If the service message is not a target service message, the central UPF processes the service message and then transmits to the peer user's central UPF via IMS, without using the local UPF to process, and without reporting to the SMF.

In this embodiment, the identifying the service message that meets the preset condition, and obtaining the target service message includes: identifying whether a target packet data network address of the service message matches a packet data network address in a probe rule, PDR; in response to that the target packet data network address of the service message matches the packet data network address in the probe rule, determining the service message to be the target service message.

The probe rule of the central UPF is sent by the SMF and is specifically constructed for newly added messages that can be processed by the local UPF, used to identify this type of service message.

The PDN (Packet Data Network) address in the probe rule PDR indicates the service type. Different service types correspond to different PDN addresses. In this embodiment, the PDN in the probe rule PDR is matched with the PDN address in the service message. If a match is successful, it is determined that the service message is a newly added service message that can be processed using local UPF (the service message with the preset model characteristic).

If there is a mismatch, it means the service message is not a newly added service message that can be processed by the local UPF. Therefore, it will not be reported to the SMF and will be transmitted to the peer user's central UPF via the ISM. In some embodiment, for other types of service messages, using other methods to process.

Step S409: the central UPF reports the target service message to the SMF.

In an embodiment, when the central UPF determines that a message is a service with the preset model characteristic, instructing the SMF that the message needs to be compressed and decompressed by the local UPF, and notifying the SMF to execute the local splitting policy.

Step S410: the SMF receives the target service message reported by the central UPF and selects a local UPF to process the target service message.

In an embodiment, this embodiment needs to reselect the local UPF according to the splitting service rule corresponding to the previously cached target service message, and determine the current target service message that needs to be inserted in PSA and used for VoNR+.

In this embodiment, the SMF selects a matching local UPF according to the pre-stored splitting service rule and the data network interface identifier (Dnai) of the processing rule to be installed.

Step S411: the SMF initiates a user plane update request, and notifies the central UPF to request an N9 tunnel.

The central UPF establishes an N9 tunnel between the central UPF and the selected local UPF according to the user plane update request, to achieve communication. After the central UPF establishes the N9 tunnel, notifying the SMF.

Step S412: the SMF initiates a user plane establishment request, notifies the local UPF to allocate relevant resources, and installs the processing rule for the target service message.

The SMF initiates a user plane establishment request to the selected local UPF. According to the user plane establishment request, the local UPF allocates the resources required for the target service message, and then installs the rules related to the VoNR+ service (target service message) in the local UPF for specific message splitting processing. Thus, the local UPF can directly process the target service based on the installed processing rule of the service message, and then forward the processed message to the IMS. Using the local UPF to optimize the transmitted data format, reducing the amount of data transmitted between the IMS and the wide network UPF, reducing the load on the IMS, and avoiding the impact of the newly added VoNR+ data channel service on existing voice and video services.

In this embodiment, the local UPF's processing method for the target service message includes compression and decompression. If the target service message is an uplink message (sender at this end), using the local UPF to compress the target service message, then relayed to the IMS after compression, and then transmitted to the peer user. If the target service message is a downlink message (if the peer user is the initiator, using the local UPF to decompress the target service message, then transmitting to the user terminal at this end via ULCL).

After the local UPF installs the processing rule of the target service message, feedbacking the installation completion information to the SMF.

Step S413: the SMF initiates a user plane update request to the central UPF, the SMF updates the downlink address to point to the forward ULCL.

Based on the local UPF installation completion information, the SMF initiates a user plane update request to the central UPF, the central UPF updates the downlink address to point to the forward ULCL. Thus, in this call request, for original VoNR voice and video messages, they are relayed to the IMS and transmitted to the peer user; for the aforementioned target service messages unrelated to the peer user, they are routed to the local UPF for processing, and directly outputted to the user terminal via ULCL after processing in the local UPF, without going through the IMS or the peer user..

Step S414: notifying the UE to install the splitting rule.

After the splitting rules are installed, subsequent transmissions of all target service messages in this call can be directly perform local splitting compression or decompression. The message data after compression processing occupies less data, optimizing data transmission during the call and improving call quality.

In this embodiment, message data compression methods include, but are not limited to, redundancy compression method or model-based (content-based and semantic-based) method. In an embodiment, the model-based method is: determining the mapping relationship between the source message set and the code subset before message transmission, ensuring that any given message appearing in the message set at any given time is always represented by the same codeword. This embodiment is not limited to the compression methods mentioned above; other data compression technique and data decompression technique may also be employed.

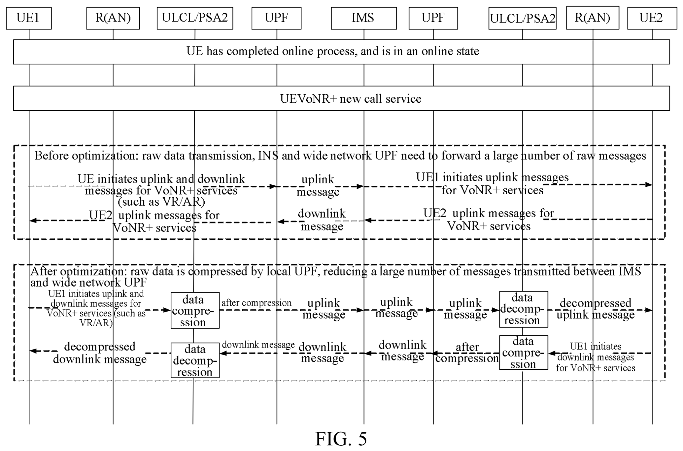

Referring to FIG. 5, which illustrates the transmission process of the data message after local compression in this embodiment. In this embodiment, during data transmission, first using a local UPF to compress the data, and then transmitting the compressed data according to the data transmission path. Compared to the exemplary techniques, this embodiment transmits compressed message data, enabling to reduce the data volume, thereby reducing the data transmission load, and improving transmission efficiency.

The application scenarios of all the embodiments mentioned above can be applied simultaneously in one terminal or in different terminals. That is, the terminal can reduce the data transmission load by formatting and optimizing newly added service messages, or reduce the amount of data transmitted by processing service messages locally, thereby lowering the data transmission load. The terminal can also simultaneously perform formatting optimization on service messages and process the service messages locally.

Based on this, when a central user plane function network element, central UPF, receives service messages initiated by a user equipment, UE, identifying the service message that meets a preset condition, and obtaining a target service message. If the target service message is the service message unrelated to the peer user, using the aforementioned embodiment shown in FIG. 3 to optimize the service message. If the target service message is the service message with the preset model characteristic, using the aforementioned embodiment shown in FIG. 4 to optimize the service message.

The aforementioned embodiments optimize the data channel for VoNR+ new calls in the 5G network. When performing services that do not rely on the other party's terminal, SMF identifies the service and selects a local UPF capable of handling this type of service, so that this part of the data is processed locally via UPF, without needing to go through IMS or the wide network UPF, thus shortening the data transmission path, reducing IMS load, and improving user experience. When the user's service data has certain model characteristics, the SMF makes a decision and selects a local UPF capable of performing data compression and data decompression, thereby reducing the amount of data transmitted over the IMS, reducing IMS load, and minimizing the impact of new call services on basic voice and video calls.

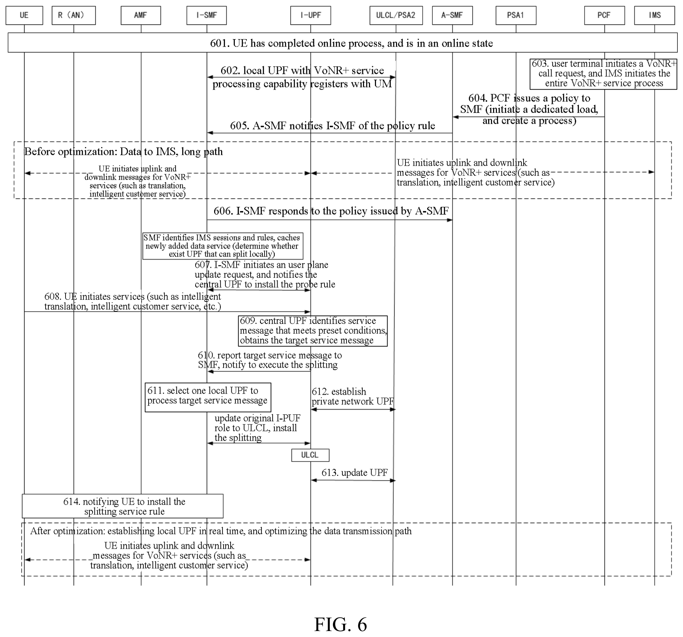

Referring to FIG. 6, which is a flowchart illustrating another embodiment of the call service processing method of the present application. This embodiment illustrates another processing method for a newly added service message in a call service, such as newly added service messages in roaming call scenarios are split to local to process, reducing the transmission of service messages during the call, thereby reducing the load on IMS and the wide network UPF, and improving call quality.

In this embodiment, the call service processing method includes:
Step S601: the UE initiates a request for the online process of the roaming scenario.

The user terminal has completed online and is in an online state. At this time, the user terminal can initiate a call request, or the user terminal can receive a call request.

In an embodiment, in the roaming scenario, in the 5G architecture, newly adding an intermediate session management function (I-SMF) to the anchor session management function (A-SMF), and implementing roaming calls by the I-SMF.

Step S602: the local UPF with VoNR+ service processing capability registers with the UM.

VoNR+ service includes the original VoNR voice service and services newly added relative to the original VoNR voice service. Based on VoNR+, new call supports more application scenarios. When a VoNR+ call is established, in addition to the original VoNR voice service, there are also other application scenarios.

In an embodiment, the 5G communication architecture includes a local UPF and a wide network UPF. The local UPF has the capability to process certain services (execution capability for service message rules), such as handling translation and intelligent customer service Q&A, without needing to go through the wide network UPF. Therefore, after the user terminal completes its online deployment, when the local UPF registers with the UM, it indicates the processing capabilities that the local UPF possesses; for example, adding the field "Capability: Local service processing" to the "N4 PFCP Assoication Setup Req" message. In this way, the UM records the service processing capabilities of each local UPF.

In an embodiment, different local UPFs have different service processing capabilities, and the corresponding service processing capability is marked according to the service type being processed. Thus, subsequently, the local UPF can be selected based on the service type matched by the processing capabilities reported by the local UPF.

Step S603: the user terminal initiates a VoNR+ call request, and the IMS initiates the entire VoNR+ service process.

When the user terminal initiates a VoNR+ call request, the VoNR+ service process is started. Before any service message is transmitted, rules for identifying service messages are established, that is, probe rules for service messages are established, creating a processing environment for the local UPF to process service messages.

Step S604: the PCF issues a policy to the SMF.

Base on that the call request is a VoNR+ call request, including existing VoNR voice services, and further including services of other application scenarios, the policy issued by the PFC includes policies related to accessing VoNR voice services, as well as policies related to accessing newly added VoNR+ services.

After the user terminal initiates the call request, the PCF (policy control function Network Element) issues the policy for the call request, thereby determining the processing rule for the call request.

Step S605: the A-SMF receives the policy issued from the PCF, and the A-SMF notifies the I-SMF of this policy rule.

Step S606: the I-SMF responds to the policy issued from the A-SMF.

In this embodiment, the I-SMF responds to the policy issued by the PCF and identifies the IMS (IP Multimedia Subsystem) session to determine whether the IMS session includes a request for a newly added service.

If the IMS session includes a request for a newly added service, identifying whether the call involves a newly added service according to the data network interface identifier (Dnai) in the policy rule. In this embodiment, newly added services unrelated to the peer user are configured as target service messages, and newly added services unrelated to the peer user can be configured as service messages processed by the local server.

In this embodiment, the I-SMF determines whether the call request involves a target service message rule by identifying the call request rule. If it does, it determines that some service messages in the call can be routed to the local server and processed by the local server.

In an embodiment, when determining that a target service message exists, the I-SMF first considers the processing capabilities of the local UPF reported to UM during registration, such as the ability to execute rules for the target service message, to determine the corresponding local UPF capable of processing the target service message locally; then, it selects that local UPF to process the newly added target service message in the call.

If a pre-stored local UPF has the capability to execute the splitting service rule for the target service message, then the splitting service rule is cached so that when a service message is subsequently generated, the splitting service rule is used to perform local processing on the service message.

In this embodiment, if the local UPF reports a UPF with processing capabilities but does not include the capability to process the target service message, that is, if the pre-stored local UPF does not have the capability to execute the splitting service rule for the target service message, then this embodiment can further create a local UPF capable of processing the target service message according to the requirements of the target service message.

In some embodiment, for uplink-triggered services, it's possible to consider establishing the ULCL after triggered when the user has an uplink message, that is, inserting a local UPF on demand. In other words, the uplink message has a relatively high degree of randomness and a relatively high degree of diversity. Therefore, a local UPF capable of handling the message can be created according to the requirements of the target service message.

Once the I-SMF determines that the system has a local UPF capable of processing the target service message, caching the splitting rule for the target service message. (In this embodiment, the splitting service rule refers to the rule for processing the service message. It is defined as the splitting service rule base on that it can be split from other voice message services.)

In an embodiment, the I-SMF further constructs a probe rule for the splitting service rule. This probe rule is configured to identify the type of service message transmitted during a call, thereby triggering a choice between local UPF processing and further transmission to a wide network UPF (central UPF) for processing.

Step S607: the I-SMF initiates a user plane update request, and notifies the central UPF to install the probe rule.

After constructing the probe rule for the splitting service rule, the I-SMF sends the user plane update information to the central UPF to allow the central UPF update the user plane functionality of the central UPF. The update request carries the probe rule constructed in step S606. The central UPF installs the probe rule and responds to the SMF with the installation result and allocated resource information.

Step S608: the UE initiates a service (such as intelligent translation, intelligent customer service, etc.).

The user terminal initiates a service, and generates a service message.

In this embodiment, VoNR+ calls include various call scenarios, therefore, there are many types of service messages. For example, scenarios such as intelligent translation, intelligent customer service, fun calls, screen sharing, and home terminals, the corresponding message type is different from the original VoNR voice and video call scenarios.

Step S609: the message arrives at the central UPF via the base station, the central UPF identifies service messages that meet preset conditions, and obtains the target service message.

When the central UPF receives a service message initiated by the UE, identifying the type of the service message and determining whether it is a target service message. In this embodiment, the target service message refers to a service message newly added in a VoNR+ call, and this service message meets the following condition: the service message unrelated to the peer user.

If the service message is a target service message, the central UPF reports the service message to the I-SMF, and the I-SMF then selects a local UPF to process the service message.

If the service message is not a target service message, the central UPF processes the service message and then transmits to the peer user's central UPF via IMS, without using the local UPF to process, and without reporting to the I-SMF.

In this embodiment, the identifying the service message that meets the preset condition, and obtaining the target service message includes: identifying whether a target packet data network address of the service message matches a packet data network address in a probe rule, PDR; in response to that the target packet data network address of the service message matches the packet data network address in the probe rule, determining the service message to be the target service message.

The probe rule of the central UPF is sent by the I-SMF and is specifically constructed for newly added messages that can be processed by the local UPF, used to identify this type of service message.

The PDN (Packet Data Network) address in the probe rule PDR indicates the service type. Different service types correspond to different PDN addresses. In this embodiment, the PDN in the probe rule PDR is matched with the PDN address in the service message. If a match is successful, it is determined that the service message is a newly added service message that can be processed using local UPF (the service message unrelated to the peer user).

If there is a mismatch, it means the service message is not a newly added service message that can be processed by the local UPF. Therefore, it will not be reported to the SMF and will be transmitted to the peer user's central UPF via the ISM. In some embodiment, for other types of service messages, using other methods to process.

Step S610: the central UPF reports the target service message to the I-SMF.

In an embodiment, when the central UPF determines that a message is a service unrelated to the peer user, indicating to the I-SMF that there is a service request that does not require interaction with the peer, and notifying the SMF to execute the local splitting policy.

Step S611: the I-SMF receives the target service message reported by the central UPF and selects a local UPF to process the target service message.

This embodiment needs to reselect the local UPF according to the splitting service rule corresponding to the previously cached target service message, and determine the current target service message that needs to be inserted in PSA and used for VoNR+.

In this embodiment, the I-SMF selects a matching local UPF according to the pre-stored splitting service rule and the data network interface identifier (Dnai) of the processing rule to be installed.

Step S612: the I-SMF initiates a user plane update request, and the private network UPF is established.

The central UPF establishes an N9 tunnel between the central UPF and the selected local UPF according to the user plane update request, to achieve communication. After the central UPF establishes the N9 tunnel, notifying the I-SMF.

Step S613: the I-SMF initiates a user plane update request, the central UPF updates the downlink address, pointing to the forward ULCL.

Based on the local UPF installation completion information, the I-SMF initiates a user plane update request to the central UPF, the central UPF updates the downlink address to point to the forward ULCL. Thus, in this call request, for original VoNR voice and video messages, they are relayed to the IMS and transmitted to the peer user; for the aforementioned target service messages unrelated to the peer user, they are routed to the local UPF for processing, and directly outputted to the user terminal via ULCL after processing in the local UPF, without going through the IMS or the peer user..

Step S614: notifying the UE to install the splitting rule.

After the splitting rules are installed, subsequent transmissions of all target service messages in this call can be directly split without going through ISM and the wide network UPF.

In an embodiment, the aforementioned steps refer to the process of establishing a splitting rule when the target service message is first received during this call. In the service messages initiated subsequently, if the target service message is identified, directly processing by the local UPF, and then sending to the user terminal via ULCL.

In this embodiment, the I-SMF can request local UPF resources in real time according to the actual needs of VoNR+, optimize the user's data transmission path, and improve call quality.

In this embodiment, some service scenarios bypass IMS and the wide network UPF, providing faster call response to improve the user's VoNR+ service experience.

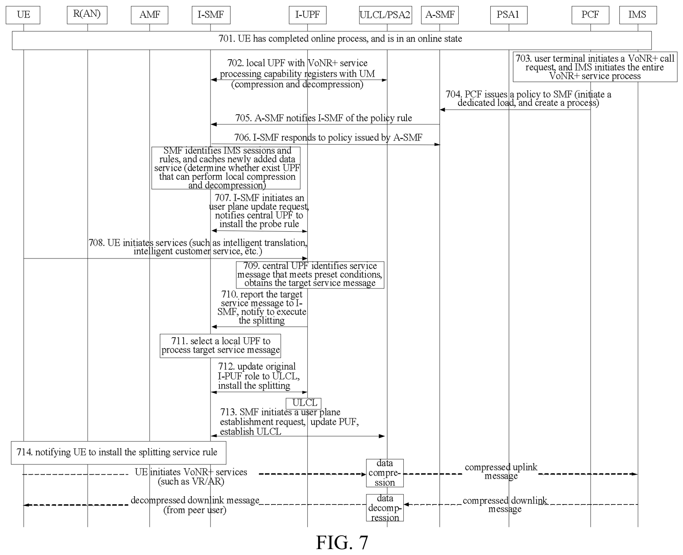

Referring to FIG. 7, which is a flowchart illustrating another embodiment of the call service processing method of the present application. This embodiment illustrates another processing method for a newly added service message in a call service. For example, in a roaming call scenario, the newly added service message are split and formatted locally before being transmitted to the peer user via IMS and the wide network UPF. This optimized and formatted service messages can reduce the amount of data transmitted in IMS and the wide network UPF, lower IMS latency, avoid the impact of the newly added VoNR+ data channel service on existing voice and video services, and improve call quality.

In this embodiment, the call service processing method includes:
Step S701: the user initiates a request for the online process of the roaming scenario.

The user terminal has completed its online setup and is in an online state. At this time, the user terminal can initiate a call request or receive a call request.

In an embodiment, in the roaming scenario, within the 5G architecture, newly adding an intermediate session management function, I-SMF, to the anchor session management function, A-SMF, implementing the roaming calls by the I-SMF.

Step S702: the local UPF with VoNR+ service processing capabilities registers with the UM.

VoNR+ services include existing VoNR voice services and newly added services relative to existing VoNR voice services. Based on that VoNR+ new call supports more application scenarios, when a VoNR+ call is established, in addition to the original VoNR voice service, there are also services for other application scenarios..

In an embodiment, the 5G communication architecture includes a local UPF and a wide network UPF. The local UPF has the capability to process certain services (execution capability of service message rules), such as handling some translation and intelligent customer service Q&A, without needing to process by the wide network UPF. Therefore, after the user terminal completes its online, when the local UPF registers with the UM, indicating the processing capability that the local UPF possesses; for example, adding the field "Capability: Local service processing" to the "N4 PFCP Association Setup Req" message. In this way, the UM records the service processing capability that each local UPF possesses.

In an embodiment, different local UPFs have different service processing capabilities, and the corresponding service processing capability is marked according to the service type being processed. Thus, subsequently, the local UPF can be selected based on the service type matched by the processing capabilities reported by the local UPF.

For example, a UPF with the capability to handle VoNR+ service data compression and data decompression registers with the UM, and indicates that the local UPF has the capability to compress data and decompress data.

Step S703: the user terminal initiates a VoNR+ call request, and the IMS initiates the entire VoNR+ service process.

When the user terminal initiates a VoNR+ call request, starting the VoNR+ service process. Before any service message is transmitted, establishing rules for identifying service messages, that is, establishing probe rules for service messages, creating a processing environment for the local UPF to process service messages.

Step S704: the PCF issues a policy to the SMF.

Base on that the call request is a VoNR+ call request, including existing VoNR voice services, and further including services of other application scenarios, the policy issued by the PFC includes policies related to accessing VoNR voice services, as well as policies related to accessing newly added VoNR+ services.

Step S705: the A-SMF receives the policy issued by the PCF, and the A-SMF notifies the I-SMF of this policy rule.

Step S706: the I-SMF responds to the policy issued by the A-SMF.

In this embodiment, the I-SMF responds to the policy issued by the PCF and identifies the IMS (IP Multimedia Subsystem) session to determine whether the IMS session includes a request for a newly added service.

If the IMS session includes a request for a newly added service, identifying whether the call involves a newly added service according to the data network interface identifier (Dnai) in the policy rule. In this embodiment, the newly added service message with model characteristics (feature model) that can be extracted to compress and decompress is configured as the target service message. This type of service message is configured to be the service message processed by a local server, where the processing method is to format the service messages; for example, if the service message is an uplink message, then compressing the service message; if the service message is a downlink message, then decompressing the service message.

In this embodiment, the I-SMF determines whether the call request involves a target service message rule by identifying the call request rule. If it does, it determines that some service messages in the call can be routed to the local server and processed by the local server.

In an embodiment, when determining that a target service message exists, the I-SMF first considers the processing capabilities of the local UPF reported to UM during registration, such as the ability to execute rules for the target service message, to determine the corresponding local UPF capable of processing the target service message locally; then, it selects that local UPF to process the newly added target service message in the call.

If a pre-stored local UPF has the capability to execute the splitting service rule for the target service message, then the splitting service rule is cached so that when a service message is subsequently generated, the splitting service rule is used to perform local processing on the service message.

In this embodiment, if the local UPF reports a UPF with processing capabilities but does not include the capability to process the target service message, that is, if the pre-stored local UPF does not have the capability to execute the splitting service rule for the target service message, then this embodiment can further create a local UPF capable of processing the target service message according to the requirements of the target service message.

In some embodiment, for uplink-triggered services, it's possible to consider establishing the ULCL after triggered when the user has an uplink message, that is, inserting a local UPF on demand. In other words, the uplink message has a relatively high degree of randomness and a relatively high degree of diversity. Therefore, a local UPF capable of handling the message can be created according to the requirements of the target service message.

Once the SMF determines that the system has a local UPF capable of processing the target service message, caching the splitting rule for the target service message. (In this embodiment, the splitting service rule refers to the rule for processing the service message. It is defined as the splitting service rule base on that it can be split from other voice message services.)

In an embodiment, the I-SMF further constructs a probe rule for the splitting service rule. This probe rule is configured to identify the type of service message transmitted during a call, thereby triggering a choice between local UPF processing and further transmission to a wide network UPF (central UPF) for processing.

Step S707: the I-SMF initiates a user plane update request, and notifies the central UPF to install the probe rule.

After constructing the probe rule for the splitting service rule, the SMF sends the user plane update information to the central UPF to allow the central UPF update the user plane functionality of the central UPF. The update request carries the probe rule constructed in step S706. The central UPF installs the probe rule and responds to the I-SMF with the installation result and allocated resource information.

Step S708: the UE initiates a service (such as intelligent translation, intelligent customer service, etc.).

The user terminal initiates a service, and generates a service message.

In this embodiment, VoNR+ calls include various call scenarios, therefore, there are many types of service messages. For example, scenarios such as intelligent translation, intelligent customer service and so on, the corresponding message type are different from the original VoNR voice and video call scenarios.

Step S709: the message arrives at the central UPF via the base station, the central UPF identifies service messages that meet preset conditions, and obtains the target service message.

When the central UPF receives a service message initiated by the UE, identifying the type of the service message and determining whether it is a target service message. In this embodiment, the target service message refers to a service message newly added in a VoNR+ call, and this service message meets the following condition: the service message with the preset model characteristic. In other words, when the central UPF detects that a service message belongs to a message that can be formatted according to a standard, that is, meeting the preset condition and being the service message with model characteristics.

If the service message is a target service message, the central UPF reports the service message to the I-SMF, the I-SMF then selects a local UPF to process the service message, and processes the target service message before being transferred to IMS.

If the service message is not a target service message, the central UPF processes the service message and then transmits to the peer user's central UPF via IMS, without using the local UPF to process, and without reporting to the I-SMF.

In this embodiment, the identifying the service message that meets the preset condition, and obtaining the target service message includes: identifying whether a target packet data network address of the service message matches a packet data network address in a probe rule, PDR; in response to that the target packet data network address of the service message matches the packet data network address in the probe rule, determining the service message to be the target service message.

The probe rule of the central UPF is sent by the I-SMF and is specifically constructed for newly added messages that can be processed by the local UPF, used to identify this type of service message.

The PDN (Packet Data Network) address in the probe rule PDR indicates the service type. Different service types correspond to different PDN addresses. In this embodiment, the PDN in the probe rule PDR is matched with the PDN address in the service message. If a match is successful, it is determined that the service message is a newly added service message that can be processed using local UPF (the service message with the preset model characteristic).

If there is a mismatch, it means the service message is not a newly added service message that can be processed by the local UPF. Therefore, it will not be reported to the I-SMF and will be transmitted to the peer user's central UPF via the ISM. In some embodiment, for other types of service messages, using other methods to process.

Step S710: the central UPF reports the target service message to the I-SMF.

In an embodiment, when the central UPF determines that a message is a service with the preset model characteristic, instructing the I-SMF that the message needs to be compressed and decompressed by the local UPF, and notifying the I-SMF to execute the local splitting policy.

Step S711: the I-SMF receives the target service message reported by the central UPF and selects a local UPF to process the target service message.

In an embodiment, this embodiment needs to reselect the local UPF according to the splitting service rule corresponding to the previously cached target service message, and determine the current target service message that needs to be inserted in PSA and used for VoNR+.

In this embodiment, the I-SMF selects a matching local UPF according to the pre-stored splitting service rule and the data network interface identifier (Dnai) of the processing rule to be installed.

Step S712: the I-SMF initiates a user plane update request (IUPF and ULCL are the same UPF).

In an embodiment, a user plane update request requests the local UPF to install a splitting rule for compressing data or decompressing data.

The I-SMF initiates a user plane establishment request to the selected local UPF. According to the user plane establishment request, the local UPF allocates the resources required for the target service message, and then installs the rules related to the VoNR+ service (target service message) in the local UPF for specific message splitting processing. Thus, the local UPF can directly process the target service based on the installed processing rule of the service message, and then forward the processed message to the IMS. Using the local UPF to optimize the transmitted data format, reducing the amount of data transmitted between the IMS and the wide network UPF, reducing the load on the IMS, and avoiding the impact of the newly added VoNR+ data channel service on existing voice and video services.

In this embodiment, the local UPF's processing method for the target service message includes compression and decompression. If the target service message is an uplink message (sender at this end), using the local UPF to compress the target service message, then relayed to the IMS after compression, and then transmitted to the peer user. If the target service message is a downlink message (if the peer user is the initiator, using the local UPF to decompress the target service message, then transmitting to the user terminal at this end via ULCL).

After the local UPF installs the processing rule of the target service message, feedbacking the installation completion information to the SMF.

Step S713: the SMF initiates a user plane establishment request (IUP and ULCL are not the same UPF).

SMF initiates the user plane establishment request, recommending I-UPF; I-SMF will subsequently delete IUPF via a timer.

Based on the local UPF installation completion information, the SMF initiates a user plane update request to the central UPF, the central UPF updates the downlink address to point to the forward ULCL. Thus, in this call request, for original VoNR voice and video messages, they are relayed to the IMS and transmitted to the peer user; for the aforementioned target service messages unrelated to the peer user, they are routed to the local UPF for processing, and directly outputted to the user terminal via ULCL after processing in the local UPF, without going through the IMS or the peer user..

Step S714: notifying the UE to install the splitting rule and complete the subsequent process.

After the splitting rules are installed, subsequent transmissions of all target service messages in this call can be directly perform local splitting compression or decompression. The message data after compression processing occupies less data, optimizing data transmission during the call and improving call quality.

Thus, I-SMF can identify user service characteristics based on user's VoNR+ service needs and optimize the transmitted data format in real time using local UPF, reducing the data volume of messages transmitted in the belonging places UPF, IMS, and wide network UPF. The present application can reduce IMS load, avoid the impact of newly added VoNR+ data channel services on existing voice and video services, and improve user experience.

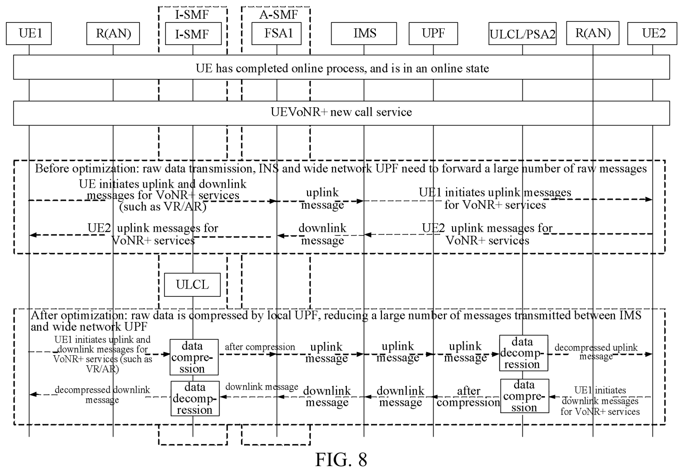

Referring to FIG. 8, which illustrates the transmission process of the data message after local compression in this embodiment. In this embodiment, during data transmission, first using a local UPF to compress the data, and then transmitting the compressed data according to the data transmission path. Compared to the exemplary techniques, this embodiment transmits compressed message data, enabling to reduce the data volume, thereby reducing the data transmission load, and improving transmission efficiency.

The examples listed above are merely for reference. To avoid redundancy, they are not listed individually here. In actual development or application, combinations can be flexibly made according to actual needs, but any combination falls within the technical solution of the present application and is therefore covered by the scope of the present application.

The present application further provides a call service processing system, including:
a processor; and
a storage device storing a program, when the program is executed by the processor, the processor implements the call service processing method described in any of the aforementioned embodiments.

The present application further provides a call service processing device, including:
one or more processors; and
a storage device storing one or more programs, when the one or more programs are executed by the one or more processors, the one or more processors implement the call service processing method described in any of the aforementioned embodiments.

The present application further provides a computer-readable storage medium, characterized by storing a computer processing program, the computer processing program is invoked by a processor to execute the call service processing method in any of the aforementioned embodiments.

In the embodiments of the communication device and computer-readable storage medium provided in the present application, all technical features of any of the aforementioned processing method embodiments may be included. The extended and explained content of the specification is basically the same as that of the various embodiments of the aforementioned methods, and will not be repeated here.

The present application further provides a computer program product, which includes computer program code. When the computer program code is run on a computer, it causes the computer to perform the methods in the various possible implementations described above.

The aforementioned scenarios are merely examples and do not constitute a limitation on the application scenarios of the technical solutions provided in the embodiments of the present application. The technical solutions of the present application can also be applied to other scenarios. For example, those skilled in the art will recognize that with the evolution of system architecture and the emergence of new service scenarios, the technical solutions provided in the embodiments of the present application are also applicable to similar technical problems.

The sequence numbers of the aforementioned embodiments are for descriptive purposes only and do not represent the superiority or inferiority of the embodiments.

The steps in the methods of the embodiments of the present application can be adjusted, merged, and deleted according to actual needs.

The units in the devices of the embodiments of the present application can be merged, divided, and deleted according to actual needs.

In the present application, the same or similar terms, concepts, technical solutions, and/or application scenario descriptions are generally described in detail only when they appear for the first time. When they reappear later, for the sake of brevity, they are generally not repeated. When understanding the technical solutions of the present application, for the same or similar terms, concepts, technical solutions, and/or application scenario descriptions that are not described in detail later, you can refer to their previous related detailed descriptions.

In the present application, the descriptions of each embodiment have their own emphasis. Parts not described or recorded in detail in a certain embodiment can be referred to the relevant descriptions of other embodiments.

The technical features of the technical solutions of the present application can be combined arbitrarily. For the sake of brevity, not all possible combinations of the technical features in the aforementioned embodiments are described. However, as long as the combination of these technical features does not contradict each other, it should be considered within the scope of the present application.

With the above description of the embodiments, those skilled in the art can clearly understand that the methods of the aforementioned embodiments can be implemented by means of software plus necessary general-purpose hardware platforms. Certainly, they can also be implemented by hardware, but in many cases, the former is a better implementation method. Based on this understanding, the technical solution of the present application, in essence, or the part that contributes to the prior art, can be embodied in the form of a software product. This computer software product is stored in a storage medium (such as ROM/RAM, magnetic disk, optical disk) as described above, and includes several instructions to cause a terminal device (which may be a mobile phone, computer, server, controlled terminal, or network device, etc.) to execute the methods of each embodiment of the present application.

In the aforementioned embodiment, it can be implemented entirely or partially by software, hardware, firmware, or any combination thereof. When implemented using software, it can be implemented entirely or partially in the form of a computer program product. A computer program product includes one or more computer instructions. When the computer program instructions are loaded and executed on a computer, all or part of the flow or function according to the embodiments of the present application is generated. The computer can be a general-purpose computer, a special-purpose computer, a computer network, or other programmable device. Computer instructions can be stored in a computer-readable storage medium or transmitted from one computer-readable storage medium to another. For example, computer instructions can be transmitted from one website, computer, server, or data center central to another via wired (e.g., coaxial cable, fiber optic, digital subscriber line) or wireless (e.g., infrared, wireless, microwave, etc.) means. The computer-readable storage medium can be any usable medium accessible to a computer or a data storage device such as a server or data center central that integrates one or more usable media. Usable media can be magnetic media (e.g., floppy disks, storage disks, magnetic tapes), optical media (e.g., DVDs), or semiconductor media (e.g., solid-state disks (SSDs)).

The above are merely some embodiments of the present application and do not limit the scope of the present application. Any equivalent structural or procedural transformations made based on the content of this specification and drawings, or direct or indirect applications in other related technical fields, are similarly included within the scope of the present application.

## Claims

1. A call service processing method, **characterized by** comprising:
in response to that a central user plane function, UPF, network element receives service messages initiated by a user equipment, UE, identifying the service message that meets a preset condition, and obtaining a target service message;
reporting, by the central UPF, the target service message to a session management function, SMF; and
receiving, by the SMF, the target service message reported by the central UPF, and selecting one local UPF to process the target service message.

2. The call service processing method according to claim 1, wherein the service message that meets the preset condition comprises at least one of following:
a service message unrelated to a peer user; and
a service message with a preset model characteristic.

3. The call service processing method according to claim 1, wherein the identifying the service message that meets the preset condition, and obtaining the target service message comprises:
identifying whether a target packet data network address of the service message matches a packet data network address in a probe rule, PDR; and
in response to that the target packet data network address of the service message matches the packet data network address in the probe rule, determining the service message to be the target service message.

4. The call service processing method according to claim 1, wherein in response to that the target service message reported by the central UPF received by the SMF is a service message unrelated to a peer user, the selecting the one local UPF to process the target service message comprises:
selecting, by the SMF, the one local UPF to allocate resources according to a pre-stored splitting service rule, and installing a processing rule of the target service message.

5. The call service processing method according to claim 4, wherein the selecting, by the SMF, the one local UPF to allocate resources according to the pre-stored splitting service rule, and installing the target service message processing rule comprises: matching local UPF according to the pre-stored splitting service rule and a data network interface identifier, Dnai of a processing rule to be installed; and
allocating, by the local UPF, required resource for the target service message, and installing the processing rule of the target service message.

6. The call service processing method according to claim 1, wherein in response to that the target service message reported by the central UPF received by the SMF is a service message with a preset model characteristic, the selecting the one local UPF to process the target service message comprises:
selecting, by the SMF, one local UPF to format the target service message according to a pre-stored splitting service rule.

7. The call service processing method according to claim 6, wherein the selecting, by the SMF, the one local UPF to format the target service message according to the pre-stored splitting service rule comprises:
selecting, by the SMF, a matching local UPF according to the pre-stored splitting service rule; and
compressing or decompressing, by the local UPF, the target service message.

8. The call service processing method according to any one of claims 1 to 7, wherein before the in response to that the central UPF network element receives the service messages initiated by the UE, identifying the service message that meets the preset condition, and obtaining the target service message, the method further comprises:
in response to that the SMF receives a call establishment request, constructing a probe rule;
initiating a user plane update request to the central UPF based on the probe rule; and
installing, by the central UPF, the probe rule carried in the update request according to the update request, to allow the central UPF detect whether the service message is the target service message based on the probe rule in response to receiving the service message sent by the UE.

9. The call service processing method according to claim 8, wherein the in response to that the SMF receives the call establishment request, constructing the probe rule comprises:
in response to receiving the call establishment request, identifying the splitting service rule in a policy according to the policy corresponding to the call establishment request issued by the policy control function, PCF to the SMF; wherein the policy comprises the splitting service rule for newly added service message in response to that the call establishment request comprises newly added service message unrelated to a peer user or service message with the preset model characteristic;
determining whether a pre-stored local UPF possesses a capability to execute the splitting service rule, wherein the local UPF is configured to indicate possessed execution capability in response to registering with the SMF; and
in response to that the pre-stored local UPF possesses the capability to execute the splitting service rule, caching the splitting service rule, and constructing a probe rule for the splitting service rule.

10. The call service processing method according to claim 9, wherein before the caching the splitting service rule, the method further comprises:
in response to that the pre-stored local UPF does not possess the capability to execute the splitting service rule, inserting one local UPF according to a processing requirement of the splitting service rule.

11. The call service processing method according to claim 9, wherein the in response to receiving the call establishment request, identifying the splitting service rule in the policy according to the policy corresponding to the call establishment request issued by the PCF to the SMF comprises:
in response to the PCF receiving the call establishment request, issuing a policy corresponding to the call establishment request to an anchor session management function, A-SMF;
receiving, by the A-SMF, the policy, and notifying an intermediate session management function, I-SMF of the policy; and
identifying, by the I-SMF, the splitting service rules in the policy.

12. The call service processing method according to claim 1, wherein the SMF comprises an intermediate session management function, I-SMF, and the reporting the target service message to the SMF comprises:
reporting, by the central UPF, the target service message to the I-SMF to allow the I-SMF select one local I-UPF to process the target service message.

13. A call service processing method, **characterized by** comprising:
receiving, by a session management function, SMF, a target service message reported by a central user plane function, UPF, network element; and
selecting one local UPF to process the target service message.

14. The call service processing method according to claim 13, wherein in response to that the target service message reported by the SMF to the central UPF is a service message unrelated to the peer user, the selecting the one local UPF to process the target service message comprises:
selecting, by the SMF, a matching local UPF according to a pre-stored splitting service rule and a data network interface identifier, Dnai of a processing rule to be installed, and installing the processing rule of the target service message.

15. The call service processing method according to claim 13, wherein in response to that the target service message reported by the central UPF received by the SMF is a service message with a preset model characteristic, the selecting the one local UPF to process the target service message comprises:
selecting, by the SMF, a matching local UPF to format the target service message according to a pre-stored splitting service rule.

16. The call service processing method according to claim 13, wherein, before the receiving, by the SMF, the target service message reported by the central UPF network element, the method further comprises:
in response to that the SMF receives a call establishment request, constructing a probe rule; and
initiating a user plane update request to the central UPF based on the probe rule.

17. The call service processing method according to claim 16, wherein the in response to that the SMF receives the call establishment request, constructing the probe rule comprises:
in response to receiving the call establishment request and receiving a policy corresponding to the call establishment request issued by the policy control function, PCF, identifying the splitting service rule in the policy; wherein the policy comprises the splitting service rule for newly added service message in response to that the call establishment request newly adds a service message unrelated to a peer user or a service message with the preset model characteristic;
determining whether a pre-stored local UPF possesses a capability to execute the splitting service rule, wherein the local UPF is configured to indicate possessed execution capability in response to registering with the SMF; and
in response to that the pre-stored local UPF possesses the capability to execute the splitting service rule, caching the splitting service rule, and constructing a probe rule for the splitting service rule.

18. The call service processing method according to claim 17, wherein before the caching the splitting service rule, the method further comprises:
in response to that the pre-stored local UPF does not possess the capability to execute the splitting service rule, inserting one local UPF according to a processing requirement of the splitting service rule.

19. A call service processing method, **characterized by** comprising:
in response to that a central user plane function, UPF, network element receives service messages initiated by a user equipment, UE, identifying the service message that meets a preset condition, and obtaining a target service message; and
reporting the target service message to a session management function, SMF.

20. The call service processing method according to claim 19, wherein the service message that meet the preset condition comprises at least one of following:
a service message unrelated to a peer user; and
a service message with a preset model characteristic.

21. The call service processing method according to claim 19, wherein the identifying the service message that meets the preset condition, and obtaining the target service message comprises:
identifying, by the central UPF, whether a target packet data network address of the service message matches a packet data network address in a probe rule, PDR; and
in response to that the target packet data network address of the service message matches the packet data network address in the probe rule, determining the service message to be the target service message.

22. The call service processing method according to claim 19, wherein before the in response to that the central UPF network element receives the service messages initiated by the UE, identifying the service message that meets the preset condition, and obtaining the target service message, the method further comprises:
receiving, by the central UPF, a user plane update request initiated by the SMF, wherein the update request is configured to carry a probe rule; and
installing, by the central UPF, the probe rule.

23. A call service processing system, **characterized by** comprising:
a processor; and
a storage device storing a program, wherein when the program is executed by the processor, the processor implements the call service processing method according to any one of claims 1 to 12.

24. A call service processing device, **characterized by** comprising:
one or more processors; and
a storage device storing one or more programs, wherein when the one or more programs are executed by the one or more processors, the one or more processors implement the call service processing method according to any one of claims 13 to 18, and/or the call service processing method according to any one of claims 19 to 22.

25. A computer-readable storage medium, **characterized by** storing a computer processing program, the computer processing program is invoked by a processor to execute the call service processing method according to any one of claims 1 to 22.
